# EUROPÄISCHE PATENTSCHRIFT

(11) **EP 3 551 515 B1**
(45) Veröffentlichungstag und Bekanntmachung des Hinweises auf die Patenterteilung: **06.10.2021**
(21) Anmeldenummer: 17801439.5
(22) Anmeldetag: 17.11.2017
(51) Int. Cl.: B60T 13/56, F16J 3/02

(54) **PNEUMATISCHER BREMSKRAFTVERSTÄRKER MIT EINEM ABDICHTELEMENT**
PNEUMATIC BRAKE BOOSTER HAVING A SEALING ELEMENT
SERVOFREIN PNEUMATIQUE AVEC UN ÉLÉMENT D'ÉTANCHÉITÉ

(30) Priorität: 08.12.2016 DE 102016224490
(43) Veröffentlichungstag der Anmeldung: 16.10.2019
(73) Patentinhaber: Continental Teves AG & Co. OHG, 60488 Frankfurt am Main (DE)
(72) Erfinder: FALLER, Jürgen, 63796 Kahl (DE); JAKOBI, Ralf, 65439 Flörsheim (DE)
(74) Vertreter: Continental Corporation
(86) Internationale Anmeldenummer: PCT/EP2017/079591
(87) Internationale Veröffentlichungsnummer: WO 2018/104031

(56) Entgegenhaltungen:
- DE-A1- 3 942 211
- DE-A1- 19 703 407
- DE-A1-102005 061 353
- DE-A1-102006 011 414
- GB-A- 2 082 276
- GB-A- 2 112 105
- GB-A- 2 328 991
- US-A- 4 596 178
- US-A1- 2005 092 170
- US-B1- 6 390 567
- US-B1- 7 048 342

## Beschreibung

Die Erfindung betrifft einen pneumatischen Bremskraftverstärker insbesondere für eine hydraulische Kraftfahrzeugbremsanlage mit Merkmalen nach dem Oberbegriff des Anspruchs 1.

Derartige Bremskraftverstärker sind weit verbreitet und bekannt. Das Verstärkergehäuse von einem derartigen Bremskraftverstärkerweise weist wenigstens zwei dünnwandige Schalenelemente auf, welche miteinander verbunden oder aneinander fixiert beziehungsweise gekoppelt sind. In dem Verstärkergehäuse ist dabei wenigstens eine Unterdruckkammer von einer Arbeitskammer durch ein Abdichtelement aus Elastomerwerkstoff pneumatisch getrennt. Weil das Abdichtelement im Betrieb axial über längere Strecken verfahren wird, verfügt es, meinst radial außen, über einen Rollmembranabschnitt, an dessen Radialen Außenrand eine Dichtwulst angeformt ist. Diese Dichtwulst wird zwischen den Schalenelementen des Verstärkergehäuses in einem Dichtsitz - einer Art Klemmraum eingeklemmt, dessen Wände durch eine gesonderte Formgebung der Schalenelemente gebildet werden.

Für eine dauerhaft zuverlässige Abdichtung muss beispielsweise vorgesorgt werden, dass der sich bewegende Rollmembranabschnitt weder bei Montage noch im Betrieb an scharfen Kanten beschädigt wird, dass ein Herausrutschen der Dichtwulst im betrieb - sogenanntes Ausknöpfen - verhindert wird und die Schalenelemente zugleich möglichst einfach und sicher herstellbar und miteinander verbindbar sind. Zudem ist ein dauerhafter Korrosionsschutz von großer Bedeutung.

Aus JP 2013252787 A ist ein gattungsgemäßer Bremskraftverstärker bekannt. Die radiale Innenwand seines Klemmraums ist J 2. durch einen rohrförmigen Vorsprung eines Schalenelements gebildet. Der Vorsprung ist dabei an seiner dem Rollmembranabschnitt zugewandten Vorderkante gefaltet und dadurch verrundet gestaltet, wodurch ein zuverlässiger Schnittschutz des Rollmembranabschnitts gegeben ist. Die Verbindung der Schalenelemente ist jedoch mit einer aufwändigen mehrstufigen Kaskade ineinander greifenden radialen Absätze und Kragen an beiden Schalenelementen realisiert, welche den Herstellaufwand, das Gewicht und den Materialverbrauch erhöhen. Zudem werden zur Fixierung der Schalenelemente ausgestanzten Haltekrallen eingesetzt, wodurch die Korrosionsschutzschicht garantiert beschädigt wird.

Aus US 7 048 342 B1 ist ein Bremskraftverstärker bekannt, bei dem die Verbindung der Schalenelemente durch Biegelaschen realisiert sind, welche an dem rückseitigen Schalenelement ausgebildet sind. Nach dem Zusammenführen der beiden Schalenelemente werden die Biegelaschen axial hinter einem radial gerichteten Kragen des zweiten Schalenelements nach radial innen umgebogen, wodurch ein Auseinanderschieben der beiden Schalenelemente verhindert wird. Hierdurch können jedoch weder eine definierte Positionierung der beiden Schalenelemente zueinander noch der Klemmgrad des Dichtwulstes exakt festgelegt werden, was den nachfolgenden Kalibrierungsaufwand signifikant erhöht.

Es stellt sich somit die Aufgabe, einen herstell- und montageoptimierten Bremskraftverstärker anzubieten, bei dem das Abdichtelement sicher und dauerhaft zuverlässig aufgenommen werden kann.

Die Aufgabe wird erfindungsgemäß durch einen Bremskraftverstärker mit der Merkmalskombination nach dem Anspruch 1 gelöst. Unteransprüche zusammen mit Figuren und Beschreibungen geben weitere erfindungsgemäße Ausführungsformen und vorteilhafte Weiterbildungen an.

Im Folgenden werden die Einzelheiten und Vorteile der Erfindung anhand Figurenbeschreibungen näher erläutert. Dabei wird auf die Beschreibung von allgemein bekannten Aspekten und Funktionen eines gattungsgemäßen Bremskraftverstärkers weitestgehend verzichtet und lediglich auf die erfindungsrelevanten Details eingegangen.

Im Einzelnen zeigt die
Fig.1 beispielhaft eine Axialschnittdarstellung einer Ausführungsform des erfindungsgemäßen Bremskraftverstärkers.
Fig.2 Teilansicht von zwei noch nicht miteinander verbundenen Schalenelementen in räumlicher Explosionsdarstellung.
Fig.3 eine vergrößerte Schnittansicht des Klemmraums gemäß Ausführung nach Fig.1 mit einer noch nicht umgelegten Biegelasche.
Fig.4 eine vergrößerte Schnittansicht des Klemmraums gemäß Ausführung nach Fig.1 nach der Endmontage, mit einer umgelegten Biegelasche.

### Fig.1

Ein pneumatischer Bremskraftverstärker 1 verfügt über ein dünnwandiges Verstärkergehäuse 2. Das Verstärkergehäuse 2 umfasst Schalenelemente 3 und 4, die in ihrem radialen Außenbereich miteinander verbunden sind.

Die Verstärkungskraft wird im pneumatischen Bremskraftverstärker 1 durch die Druckdifferenz zwischen einer Unterdruckkammer 25 und einer Arbeitskammer 26 erzeugt.

Die Unterdruckkammer 25 ist von der Arbeitskammer 26 durch ein elastomeres Abdichtelement 5 pneumatisch abgegrenzt, welches beim Betrieb in dem Verstärkergehäuse 2 axial verfahren wird. Zur Ausgleich der Bewegung des Abdichtelements 5 verfügt dieses über einen Rollmembranabschnitt 7, an dem an seiner radialen Außenrand eine umlaufende Dichtwulst 6 angeformt ist.

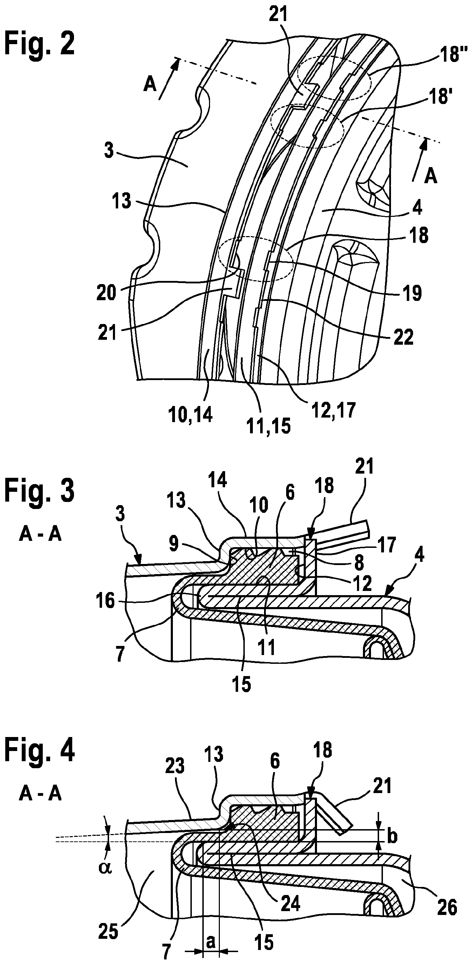

Die Dichtwulst 6 dient zum einem der Abdichtung des Innenraums des Verstärkergehäuses 2 gegen die Umgebung, zum anderen der Befestigung des Abdichtelements 5 am Verstärkergehäuse 2. Die Dichtwulst 6 ist in einem Klemmraum 8 zwischen den Schalenelementen 3 und 4 pneumatisch dichtend eingeklemmt. Der Klemmraum 8 entsteht beim Aneinanderlegen der beiden Schalenelemente 3 und 4 durch deren gesonderte, umformtechnisch erzeugte Formgebung und wird durch Wände 9,10,11,12 begrenzt, auf deren Beschaffenheit nachfolgend, insbesondere in der Fig.3 eingegangen wird.

### Fig.2

Um eine eindeutige definierte Stellung der Schalenelemente 3 und 4 für den Zusammenbau zuverlässig festzulegen, sind an Schalenelementen 3 und 4 mehrere am Umfang verteilt angeordneten Formschlussabschnitte 18 vorgesehen.

In jedem Formschlussabschnitt 18 wird zwischen dem Schalenelemente 3 und 4 ein Formschluss gebildet, indem eine Nase 19 in einer korrespondierenden Aussparung 20 positioniert wird. Dadurch wirkt der Formschluss zugleich sowohl in Umfangsrichtung, als auch axial in Richtung der beiden Schalenelemente 3 und 4 zueinander.

In dem gezeigten Ausführungsbeispiel ist die Nase 19 an einem, an dem Schalenelement 4 ausgeformten, radial nach außen ragenden umlaufenden Kragen 17 ausgebildet.

Die Aussparung (20) ist in einem rohrförmigen Vorsprung 14 angeordnet, welcher sich von einem radialen umlaufenden Absatz 13 am Schalenelement 3 axial im Wesentlichen in Richtung Schalenelement 4 erstreckt.

Eine umgekehrte oder wechselnde Anordnung von Nase 19 und Aussparung 20 sind innerhalb der Erfindung ebenso zulässig.

Die Formschlussabschnitte 18,18′,18",... können innerhalb der Erfindung sowohl regelmäßig als auch unregelmäßig am Umfang der Schalenelemente 3 und 4 verteilt angeordnet werden. Bei einer unregelmäßigen Umfangsverteilung kann eine definierte Verdrehlage der beiden Schalenelemente 3 und 4 zueinander besonders einfach kodiert und fehlerfrei eindeutig hergestellt werden.

Um die Schalenelemente 3 und 4 möglichst einfach aneinander zu fixieren und dabei eine gegebenenfalls vorhandene oberflächliche Korrosionsschutzschicht nicht zu beschädigen, sind am Vorsprung 14 axial vorgestreckt ausgebildeten Biegelaschen 21 vorgesehen. Die Biegelaschen 21 werden nach dem Zusammenfügen der Schalenelemente 3 und 4 um die radiale Außenkante 22 des Kragens 17 umgelegt beziehungsweise gebogen. Der Biegewinkel kann dabei für eine betriebssichere Fixierung deutlich geringer als 90° und gegebenenfalls sogar weniger als 45° betragen, womit ein Reißen einer oberflächlichen Korrosionsschutzschicht vermieden werden kann.

### Fig.3

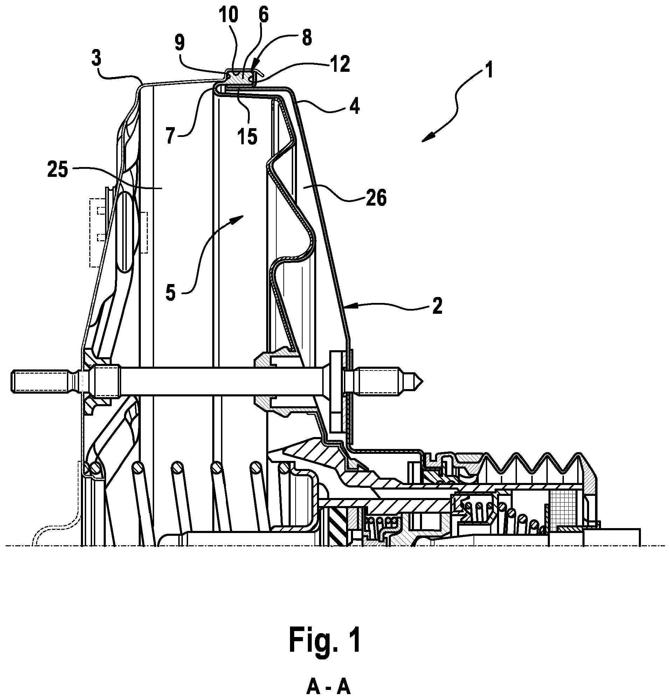

In der Fig.3 wird der Aufbau des Klemmraums 8 gemäß der Ausführungsform nach Fig.1 in einer Schnittdarstellung vergrößert dargestellt.

Der Klemmraum 8 wird im Wesentlichen durch vier Wände 9,10,11,12 begrenzt, die ihrerseits durch Formelemente der Schalenelemente 3 und 4 gebildet sind.

Eine rollmembranseitige Stirnwand 9 des Klemmraums 8 ist durch einen umlaufenden radialen Absatz 13 des Schalenelements 3 gebildet.

Eine radiale Außenwand 10 ist durch einen rohrförmigen Vorsprung 14 gebildet, der sich von dem Absatz 13 im Wesentlichen in axiale Richtung erstreckt und an dem im Übrigen dir Biegelaschen 21 angeformt sind.

Eine radiale Innenwand 11 ist durch einen rohrförmigen, axial vorgestreckten axialen Vorsprung 15 des zweiten Schalenelements 4 gebildet. Der Vorsprung 15 ist an seiner Vorderkante 16 gefaltet gestaltet, so dass die Vorderkante 16 verrundet ist und der Vorsprung 15 eine doppelte Wandstärke des Schalenelements 4 aufweist.

Eine wulstseitige Rückwand 12 des Klemmraums 8 ist durch einen umlaufenden, radial nach außen ragenden Kragen 17 gebildet, der an der zweiten Halbschale 4 ausgeformt ist und unmittelbar an den Vorsprung 15 anschließt.

### Fig.4

Im Verstärkerbetrieb wird der Rollmembranabschnitt 7 durch die Druckdifferenz in Richtung Unterdruckkammer 25 gezogen, wodurch die Dichtwulst 6 sich aus dem Klemmraum 8 in das Innere des Verstärkergehäuses 2 herauszurutschen bestrebt ist.

Um ein Herausrutschen des Dichtwulstes 6 zu verhindern ist der Rollmembranabschnitt 7 durch einen schmalen Ringspalt 24 geführt, dessen radialer Spaltmaß b deutlich schmaler als die Dicke des Dichtwulstes 6 ist.

In der abgebildeten, bevorzugten Ausführung ist der Ringspalt 24 im Querschnitt nichtparallel, sondern annähernd konisch ausgebildet und verbreitet sich in Richtung Klemmraum 8. In der gezeigten Ausführung wird dies erreicht, indem ein dem Absatz 13 unmittelbar vorgelagerter Wandungsbereich 23 des Schalenelements 3 im Wesentlichen konisch beziehungsweise kegelig mit dem Kegelwinkel α > 1° gestaltet ist.

Zudem sollte die axiale Streckung a des Ringspaltes 24 mindestens gleich und bevorzugt mindestens doppelt so groß wie sein radiales Spaltmaß b an beziehungsweise vor seiner Einmündung in den Klemmraum 8 beziehungsweise vor der Verrundung am Übergang zum Absatz 13 gemessen.

Durch ein derartiges kegeliges beziehungsweise trichterförmiges Querschnittsprofil des Ringspaltes 24 wird zum einen verhindert, dass das Abdichtelement am Übergang vom Rollmembranabschnitt 7 in die Dichtwulst 6 im Betrieb beschädigt, beispielsweise angerissen wird, weil die Last aus dem Rollmembranabschnitt 7 sich gleichmäßiger über ein größeres Volumen des Dichtwulstes 6 verteilen kann, Zum anderen wird verhindert, dass die Dichtwulst 6 bei besonders hohen Lasten am Rollmembranabschnitt 7 in den Ringspalt 24 teilweise eingezogen und dort klemmen bleibt, denn die vorliegende schräge Wandgeometrie fördert den Aufbau von axial gerichteten Anteilen von Reaktionskräften bei Kompression des Dichtwulstes 6 und unterstütz somit ihre Dekompression in Richtung Klemmkammer 8 nach Lastabfall.

### Bezugszeichenliste

- 1: Bremskraftverstärker
- 2: Verstärkergehäuse
- 3: Gehäuseschale
- 4: Gehäuseschale
- 5: Abdichtelement
- 6: Dichtwulst
- 7: Rollmembranabschnitt
- 8: Klemmraum
- 9: Stirnwand
- 10: Außenwand
- 11: Innenwand
- 12: Rückwand
- 13: Absatz
- 14: Vorsprung
- 15: Vorsprung
- 16: Vorderkante
- 17: Kragen
- 18: Formschlussabschnitt
- 19: Nase
- 20: Aussparung
- 21: Biegelasche
- 22: Außenkante
- 23: Wandungsbereich
- 24: Ringspalt
- 25: Unterdruckkammer
- 26: Arbeitskammer
- a: axiale Streckung
- b: radiales Spaltmaß
- α: Kegelwinkel

## Patentansprüche

1. Pneumatischer Bremskraftverstärker (1) mit einem Verstärkergehäuse (2), wobei das Verstärkergehäuse (2) wenigstens zwei dünnwandige Schalenelemente (3,4) und ein elastomeres Abdichtelement (5) aufweist, wobei das Abdichtelement (5) eine radial außen umlaufend ausgebildete Dichtwulst (6) und wenigstens einen an die Dichtwulst (6) anschließenden Rollmembranabschnitt (7) aufweist und die Dichtwulst (6) in einem Klemmraum (8) zwischen den Schalenelementen (3,4) pneumatisch dichtend eingeklemmt ist, wobei der Klemmraum (8) durch Wände (9, 10, 11, 12) gebildet ist, die in den Schalenelementen (3,4) umformtechnisch erzeugt sind, wobei
• eine rollmembranseitige Stirnwand (9) des Klemmraums (8) durch einen umlaufenden radialen Absatz (13) eines ersten Schalenelements (3) gebildet ist,
• eine radiale Außenwand (10) durch einen rohrförmigen Vorsprung (14) gebildet ist, der sich von dem Absatz (13) im Wesentlichen in axiale Richtung erstreckt,
• eine radiale Innenwand (11) durch einen rohrförmigen, axial vorgestreckten und an seiner Vorderkante (16) gefalteten Vorsprung (15) eines zweiten Schalenelements (4) gebildet ist, eine wulstseitige Rückwand (12) des Klemmraums (8) durch einen umlaufenden, radial nach außen ragenden Kragen (17) gebildet ist, welcher an dem zweiten Schalenelement (4) ausgeformt ist, **dadurch gekennzeichnet, dass** zwischen der Rückwand (12) und der Außenwand (10) des Klemmraums (8) wenigstens ein Formschlussabschnitt (18) vorgesehen ist, welcher in Umfangsrichtung sowie axial in Richtung Dichtwulst (6) wirkt.

2. Bremskraftverstärker (1) nach Anspruch 1, **dadurch gekennzeichnet, dass** der Formschluss im Formschlussabschnitt (18) durch wenigstens eine Nase (19) an einem der Schalenelemente (3 oder 4) gebildet ist, die in eine korrespondierende Aussparung (20) in dem anderen Schalenelement (4 oder 3) eingreift.

3. Bremskraftverstärker (1) nach Anspruch 2, **dadurch gekennzeichnet, dass** die Nase (19) am Kragen (17) und die Aussparung (20) am Vorsprung (14) ausgebildet sind.

4. Bremskraftverstärker (1) nach wenigstens einem der vorstehenden Ansprüche, **dadurch gekennzeichnet, dass** mehrere Formschlussabschnitte (18,18′,18",...) am Umfang der Schalenelemente (3,4) verteilt angeordnet sind.

5. Bremskraftverstärker (1) nach Anspruch 4, **dadurch gekennzeichnet, dass** die Formschlussabschnitte (18,18′,18",...) unregelmäßig am Umfang der Schalenelemente (3,4) verteilt angeordnet sind.

6. Bremskraftverstärker (1) nach wenigstens einem der vorstehenden Ansprüche, **dadurch gekennzeichnet, dass** die Schalenelemente (3,4) durch Biegelaschen (21) aneinander fixiert sind, wobei die Biegelaschen (21) am Vorsprung (14) axial vorgestreckt ausgebildet und um eine radiale Außenkante (22) des Kragens (17) gebogen sind.

7. Bremskraftverstärker (1) nach wenigstens einem der vorstehenden Ansprüche, **dadurch gekennzeichnet, dass** zwischen dem Vorsprung (15) und einem Wandungsbereich (23) des Schalenelements (3), der sich axial an den Absatz (13) anschließt, ein Ringspalt (24) angeordnet ist durch welchen ein Bereich des Rollmembranabschnitts (7) verläuft, wobei der Wandungsbereich (23) im Bereich des Ringspaltes (24) kegelig ausgebildet ist.

8. Bremskraftverstärker (1) nach Anspruch 7, **dadurch gekennzeichnet, dass** eine axiale Streckung (a) des Ringspaltes (24) mindestens genauso groß ist wie sein radiales Spaltmaß (b) an der Einmündung in den Klemmraum (8).

9. Bremskraftverstärker (1) nach Anspruch 7, **dadurch gekennzeichnet, dass** eine axiale Streckung (a) des Ringspaltes (24) mindestens doppelt so groß ist wie sein radiales Spaltmaß (b) an der Einmündung in den Klemmraum (8).

## Claims

1. Pneumatic brake booster (1) having a booster housing (2), wherein the booster housing (2) has at least two thin-walled shell elements (3, 4) and an elastomer sealing element (5), wherein the sealing element (5) has a sealing bead (6), which is of encircling form radially at the outside, and at least one rolling diaphragm portion (7) which adjoins the sealing bead (6), and the sealing bead (6) is sealingly clamped in a clamping space (8) between the shell elements (3, 4), wherein the clamping space (8) is formed by walls (9, 10, 11, 12) which are generated in the shell elements (3, 4) by deformation, wherein
• a rolling-diaphragm-side end wall (9) of the clamping space (8) is formed by an encircling radial shoulder (13) of the first shell element (3),
• a radial outer wall (10) is formed by a tubular projection (14) which extends from the shoulder (13) substantially in an axial direction,
• a radial inner wall (11) is formed by a tubular, axially forwardly extending projection (15), which is folded at its front edge (16), of the second shell element (4), a bead-side rear wall (12) of the clamping space (8) is formed by an encircling, radially outwardly projecting collar (17) which is formed on the second shell element (4), **characterized in that**, between the rear wall (12) and the outer wall (10) of the clamping space (8), there is provided at least one positive locking portion (18) which acts in the circumferential direction and axially in the direction of the sealing bead (6).

2. Brake booster (1) according to Claim 1, **characterized in that** the positive locking in the positive locking portion (18) is formed by at least one lug (19) on one of the shell elements (3 or 4) which engages into a corresponding recess (20) in the other shell element (4 or 3) .

3. Brake booster (1) according to Claim 2, **characterized in that** the lug (19) is formed on the collar (17) and the recess (20) is formed on the projection (14) .

4. Brake booster (1) according to at least one of the preceding claims, **characterized in that** multiple positive locking portions (18, 18', 18", ...) are arranged so as to be distributed on the circumference of the shell elements (3, 4).

5. Brake booster (1) according to Claim 4, **characterized in that** the positive locking portions (18, 18', 18'', ...) are arranged so as to be distributed in irregular fashion on the circumference of the shell elements (3, 4).

6. Brake booster (1) according to any one of the preceding claims, **characterized in that** the shell elements (3, 4) are fixed to one another by means of bending tabs (21), wherein the bending tabs (21) are formed on the projection (14) so as to extend axially forwardly and are bent around a radial outer edge (22) of the collar (17).

7. Brake booster (1) according to any one of the preceding claims, **characterized in that**, between the projection (15) and a wall region (23), which axially adjoins the shoulder (13), of the shell element (3), there is arranged an annular gap (24) through which a region of the rolling diaphragm portion (7) runs, wherein the wall region (23) is of conical form in the region of the annular gap (24).

8. Brake booster (1) according to Claim 7, **characterized in that** an axial extent (a) of the annular gap (24) is at least as large as its radial gap dimension (b) at the opening into the clamping space (8).

9. Brake booster (1) according to Claim 7, **characterized in that** an axial extent (a) of the annular gap (24) is twice as large as its radial gap dimension (b) at the opening into the clamping space (8).

## Revendications

1. Amplificateur de frein pneumatique (1) muni d'un boîtier d'amplificateur (2), le boîtier d'amplificateur (2) comprenant au moins deux éléments de coque à paroi mince (3, 4) et un élément d'étanchéité élastomère (5), l'élément d'étanchéité (5) comprenant un bourrelet d'étanchéité (6) configuré sous forme circonférentielle radialement à l'extérieur et au moins une section de membrane enroulée (7) raccordée au bourrelet d'étanchéité (6), et le bourrelet d'étanchéité (6) étant serré en réalisant l'étanchéité pneumatique dans un espace de serrage (8) entre les éléments de coque (3, 4), l'espace de serrage (8) étant formé par des parois (9, 10, 11, 12), qui sont produites par une technique de déformation dans les éléments de coque (3, 4),
- une paroi frontale côté membrane enroulée (9) de l'espace de serrage (8) étant formée par un gradin radial circonférentiel (13) d'un premier élément de coque (3),
- une paroi extérieure radiale (10) étant formée par une saillie de forme tubulaire (14), qui s'étend essentiellement en direction axiale à partir du gradin (13),
- une paroi intérieure radiale (11) étant formée par une saillie de forme tubulaire (15), préétirée axialement et pliée au niveau de son bord avant (16), d'un deuxième élément de coque (4), une paroi arrière côté bourrelet (12) de l'espace de serrage (8) étant formée par un collet circonférentiel (17), dépassant radialement vers l'extérieur, qui est formé sur le deuxième élément de coque (4), **caractérisé en ce qu'**entre la paroi arrière (12) et la paroi extérieure (10) de l'espace de serrage (8), au moins une section de complémentarité de forme (18) est prévue, qui agit en direction périphérique ainsi qu'axialement en direction du bourrelet d'étanchéité (6).

2. Amplificateur de frein (1) selon la revendication 1, **caractérisé en ce que** la complémentarité de forme dans la section de complémentarité de forme (18) est formée par au moins un bec (19) sur un des éléments de coque (3 ou 4), qui pénètre dans un évidement correspondant (20) dans l'autre élément de coque (4 ou 3) .

3. Amplificateur de frein (1) selon la revendication 2, **caractérisé en ce que** le bec (19) est formé sur le collet (17) et l'évidement (20) est formé sur la saillie (14).

4. Amplificateur de frein (1) selon au moins l'une quelconque des revendications précédentes, **caractérisé en ce que** plusieurs sections de complémentarité de forme (18, 18′, 18",...) sont réparties sur la périphérie des éléments de coque (3, 4).

5. Amplificateur de frein (1) selon la revendication 4, **caractérisé en ce que** les sections de complémentarité de forme (18, 18′, 18",...) sont réparties de manière irrégulière sur la périphérie des éléments de coque (3, 4).

6. Amplificateur de frein (1) selon au moins l'une quelconque des revendications précédentes, **caractérisé en ce que** les éléments de coque (3, 4) sont fixés l'un à l'autre par des languettes flexibles (21), les languettes flexibles (21) étant configurée sous forme préétirée axialement sur la saillie (14) et étant incurvées autour d'un bord extérieur radial (22) du collet (17).

7. Amplificateur de frein (1) selon au moins l'une quelconque des revendications précédentes, **caractérisé en ce qu'**entre la saillie (15) et une zone de paroi (23) de l'élément de coque (3), qui est raccordée axialement au gradin (13), une fente annulaire (24) est agencée, à travers laquelle une zone de la section de membrane enroulée (7) s'étend, la zone de paroi (23) étant configurée sous forme conique dans la zone de la fente annulaire (24).

8. Amplificateur de frein (1) selon la revendication 7, **caractérisé en ce qu'**un allongement axial (a) de la fente annulaire (24) est au moins aussi grande que sa mesure de fente radiale (b) au niveau de l'embouchure dans l'espace de serrage (8).

9. Amplificateur de frein (1) selon la revendication 7, **caractérisé en ce qu'**un allongement axial (a) de la fente annulaire (24) est au moins deux fois plus grand que sa mesure de fente radiale (b) au niveau de l'embouchure dans l'espace de serrage (8).
